# EUROPEAN PATENT APPLICATION

(11) **EP 4 614 336 A1**
(43) Date of publication of application: **10.09.2025**
(21) Application number: 23890156.5
(22) Date of filing: 16.06.2023
(51) Int. Cl.: G06F 15/76

(54) **DATA PROCESSING METHOD AND SYSTEM, APPARATUS, AND RELATED DEVICE**

(30) Priority: 18.11.2022 CN 202211446388
(71) Applicant: Huawei Cloud Computing Technologies Co., Ltd., Guiyang, Guizhou 550025 (CN)
(72) Inventor: HUANG, Shuang, Guiyang, Guizhou 550025 (CN)
(74) Representative: Goddar, Heinz J.
(86) International application number: PCT/CN2023/100673
(87) International publication number: WO 2024/103714

(57) **Abstract**

This application provides a data processing method. A management apparatus in a data processing system receives an access request that is for metadata of target data stored in a storage apparatus and that is sent by a computing engine, and determines, in response to the access request, the metadata of the target data based on a first mapping relationship between a second metadata model adapted to the computing engine and a first metadata model built in the management apparatus. In addition, the management apparatus authenticates the access request based on a second mapping relationship between a second permission model adapted to the computing engine and a first permission model built in the management apparatus, to send the metadata to the computing engine after the access request passes the authentication. Based on mapping between the metadata models and mapping between the permission models, the computing engine can be adapted to the metadata model and the permission model that are built in the management apparatus. In this way, scalability of connecting the data processing system to the computing engine can be improved. In addition, this application further provides a corresponding system, an apparatus, and a related device.

## Description

This application claims priority to Chinese Patent Application No. 202211446388.9, filed with the China National Intellectual Property Administration on November 18, 2022 and entitled "DATA PROCESSING METHOD AND SYSTEM, APPARATUS, AND RELATED DEVICE", which is incorporated herein by reference in its entirety.

### TECHNICAL FIELD

This application relates to the field of big data technologies, and in particular, to a data processing method and system, an apparatus, and a related device.

### BACKGROUND

A storage-compute separation architecture is a hierarchical architecture that separates a storage capability from a computing capability and implements interconnection through a network, and has become one of mainstream technology trends in recent years. The storage-compute separation architecture includes a storage layer and a computing layer. The storage layer includes at least one piece of storage hardware, configured to store data persistently. During actual application, an amount of data stored in the storage layer is large, and a data lake (data lake) is formed. The computing layer includes at least one computing engine, configured to perform data reading and writing and perform corresponding computing on the storage layer.

Currently, in most storage-compute separation architectures, metadata corresponding to the data in the storage layer is deployed at the computing layer. Therefore, when the computing layer includes a plurality of computing engines, the metadata needs to be copied to obtain a plurality of pieces of metadata, and the plurality of pieces of metadata are configured on the computing engines, so that the plurality of computing engines can share data in a same storage layer. However, due to copying and migration of the metadata between different computing engines, redundant data is formed and a problem of data inconsistency is easily caused.

Therefore, in the storage-compute separation architecture, a management layer (or referred to as a data analysis layer) may be further added. The management layer is connected to the computing layer and the storage layer through the network, to implement unified management of the metadata corresponding to the data in the storage layer. Each computing engine in the computing layer obtains the metadata by using a metadata model and a permission model in the management layer, to use the metadata to implement operations such as data reading and writing on the storage layer. The metadata model is a metadata structure used by the management layer. The permission model is a permission definition corresponding to the metadata structure.

However, when the management layer is connected to the computing engine in the computing layer, the computing engine is required to be adapted to the metadata model and the permission model that are fixedly configured in the management layer. As a result, it is difficult for some computing engines to access the storage layer because the some computing engines cannot be adapted to the metadata model and the permission model that are built in the management layer, and consequently scalability of connecting the management layer to the computing engine is limited.

### SUMMARY

In view of this, embodiments of this application provide a data processing method, to improve scalability of connecting a data processing system to a computing engine. This application further provides a corresponding data processing system, a management apparatus, a computing device cluster, a computer-readable storage medium, and a computer program product.

According to a first aspect, an embodiment of this application provides a data processing method. The method is applied to a data processing system, the data processing system includes a computing engine, a management apparatus, and a storage apparatus, a first metadata model and a first permission model are built in the management apparatus, and the first metadata model and the first permission model are adapted to the storage apparatus. In this case, in a process in which the computing engine requests to access target data stored in the storage apparatus, the management apparatus receives an access request that is for metadata of the target data and that is sent by the computing engine, determines the metadata of the target data based on a first mapping relationship in response to the access request, where the first mapping relationship is a mapping relationship between the first metadata model and a second metadata model, the second metadata model is adapted to the computing engine, and the determined metadata of the target data meets the second metadata model. In addition, the management apparatus authenticates the access request based on a second mapping relationship, where the second mapping relationship is a mapping relationship between the first permission model and a second permission model, and the second permission model is adapted to the computing engine, so that the management apparatus sends the metadata of the target data to the computing engine after the access request passes the authentication.

In this way, because the first metadata model and the first permission model in the management apparatus are respectively mapped to the second metadata model and the second permission model that are adapted to the computing engine, based on mapping between the metadata models and mapping between the permission models, the computing engine can be adapted to the metadata model and the permission model that are built in the management apparatus, to remove an adaptation limitation of the models built in the management apparatus on the computing engine, and improve scalability of connecting the data processing system to the computing engine.

In a possible implementation, the management apparatus may further receive a metadata update request sent by the computing engine, and translate, in response to the metadata update request based on the first mapping relationship, original metadata carried in the metadata update request into target metadata, where the original metadata meets the second metadata model, and the target metadata meets the first metadata model, so that the management apparatus authenticates the metadata update request based on the second mapping relationship, and updates the target metadata to the management apparatus after the metadata update request passes the authentication. For example, the target metadata may be persistently stored. In this way, the computing engine may update the metadata in the management apparatus by using the mapping relationship between the metadata models and the mapping relationship between the permission models, to help the computing engine subsequently write new data into the storage apparatus.

In a possible implementation, the management apparatus may further output a configuration page. For example, the configuration page may be presented to a user by using a client provided by the data processing system externally, so that the management apparatus establishes the first mapping relationship between the first metadata model and the second metadata model in response to a first operation performed by the user on the configuration page, and establishes the second mapping relationship between the first permission model and the second permission model in response to a second operation performed by the user on the configuration page. In this way, mapping between the metadata models and mapping between the permission models may be established by the user in a page interaction manner, to improve convenience of configuring the mapping relationship by the user.

In a possible implementation, the management apparatus may further generate an access control policy for the second metadata model and the second permission model in response to a third operation performed by the user on the configuration page, to restrict an access operation of the computing engine by using the access control policy. In this way, convenience of a user configuration can be improved in a page interaction manner.

In a possible implementation, the data processing system includes a plurality of computing engines, and the management apparatus includes a metadata model and a permission model that are adapted to each of the plurality of computing engines. In this way, the management apparatus may use the plurality of computing engines to reduce difficulty in connecting to the computing engine, to further improve scalability of connecting the management apparatus to the computing engine.

In a possible implementation, when the management apparatus determines the metadata of the target data based on the first mapping relationship, the management apparatus may specifically first read first metadata based on the access request, where the first metadata meets the first metadata model. Then, the management apparatus translates, based on the first mapping relationship, the first metadata into second metadata that meets the second metadata model (that is, the metadata of the target data). When authenticating the access request, the management apparatus may specifically first translate, based on the second mapping relationship, first permission information in the access request into second permission information that meets the first permission model, where the first permission information meets the second permission model. Then, the management apparatus authenticates the second permission information. In this way, the management apparatus may specifically send the second metadata to the computing engine after the second permission information passes the authentication. In this way, the management apparatus may determine, for the computing engine based on the first mapping relationship, metadata required by the computing engine, and perform authentication for the computing engine based on the second mapping relationship, to implement adaptation between the management apparatus and the computing engine, so as to improve scalability of connecting the data processing system to the computing engine.

According to a second aspect, this application provides a data processing system. The data processing system includes a computing engine, a management apparatus, and a storage apparatus, a first metadata model and a first permission model are built in the management apparatus, and the first metadata model and the first permission model are adapted to the storage apparatus. The computing engine is configured to generate an access request for metadata of target data; and send the access request to the management apparatus. The management apparatus is configured to determine the metadata of the target data based on a first mapping relationship in response to the access request; authenticate the access request based on a second mapping relationship; and send the metadata of the target data to the computing engine after the access request passes the authentication, where the first mapping relationship is a mapping relationship between the first metadata model and a second metadata model, the second metadata model is adapted to the computing engine, the metadata of the target data meets the second metadata model, and the second mapping relationship is a mapping relationship between the first permission model and a second permission model. The computing engine is further configured to read, based on the metadata of the target data, the target data stored in the storage apparatus.

In a possible implementation, the computing engine is further configured to generate a metadata update request; and send the metadata update request to the management apparatus. The management apparatus is further configured to translate, in response to the metadata update request based on the first mapping relationship, original metadata carried in the metadata update request into target metadata, where the original metadata meets the second metadata model, and the target metadata meets the first metadata model; authenticate the metadata update request based on the second mapping relationship; and update the target metadata to the management apparatus after the metadata update request passes the authentication.

In a possible implementation, the management apparatus is further configured to output a configuration page; establish the first mapping relationship in response to a first operation performed by a user on the configuration page; and establish the second mapping relationship in response to a second operation performed by the user on the configuration page.

In a possible implementation, the management apparatus is further configured to generate an access control policy for the second metadata model and the second permission model in response to a third operation performed by the user on the configuration page.

In a possible implementation, the data processing system includes a plurality of computing engines, and the management apparatus includes a metadata model and a permission model that are adapted to each of the plurality of computing engines.

In a possible implementation, the metadata of the target data is second metadata. The management apparatus is specifically configured to read first metadata based on the access request, where the first metadata meets the first metadata model; translate, based on the first mapping relationship, the first metadata into the second metadata that meets the second metadata model; translate, based on the second mapping relationship, first permission information in the access request into second permission information that meets the first permission model, where the first permission information meets the second permission model; authenticate the second permission information; and send the second metadata to the computing engine after the second permission information passes the authentication.

According to a third aspect, this application provides a management apparatus. The management apparatus is used in a data processing system, the data processing system further includes a computing engine and a storage apparatus, a first metadata model and a first permission model are built in the management apparatus, and the first metadata model and the first permission model are adapted to the storage apparatus. The management apparatus includes: an interaction module, configured to receive an access request that is for metadata of target data and that is sent by the computing engine, where the target data is stored in the storage apparatus; a metadata determining module, configured to determine the metadata of the target data based on a first mapping relationship in response to the access request, where the first mapping relationship is a mapping relationship between the first metadata model and a second metadata model, the second metadata model is adapted to the computing engine, and the metadata of the target data meets the second metadata model; and an authentication module, configured to authenticate the access request based on a second mapping relationship, where the second mapping relationship is a mapping relationship between the first permission model and a second permission model, and the second permission model is adapted to the computing engine. The interaction module is further configured to send the metadata of the target data to the computing engine after the access request passes the authentication.

In a possible implementation, the interaction module is further used by the management apparatus to receive a metadata update request sent by the computing engine. The metadata determining module is further configured to translate, in response to the metadata update request based on the first mapping relationship, original metadata carried in the metadata update request into target metadata, where the original metadata meets the second metadata model, and the target metadata meets the first metadata model. The authentication module is further configured to authenticate the metadata update request based on the second mapping relationship. The interaction module is further configured to update the target metadata to the management apparatus after the metadata update request passes the authentication.

In a possible implementation, the interaction module is further configured to output a configuration page. The management apparatus further includes a mapping module, configured to establish the first mapping relationship in response to a first operation performed by a user on the configuration page; and establish the second mapping relationship in response to a second operation performed by the user on the configuration page.

In a possible implementation, the mapping module is further configured to generate an access control policy for the second metadata model and the second permission model in response to a third operation performed by the user on the configuration page.

In a possible implementation, the data processing system includes a plurality of computing engines, and the management apparatus includes a metadata model and a permission model that are adapted to each of the plurality of computing engines.

In a possible implementation, the metadata of the target data is second metadata. The metadata determining module is specifically configured to read first metadata based on the access request, where the first metadata meets the first metadata model; and translate, based on the first mapping relationship, the first metadata into the second metadata that meets the second metadata model. The authentication module is specifically configured to translate, based on the second mapping relationship, first permission information in the access request into second permission information that meets the first permission model, where the first permission information meets the second permission model; and authenticate the second permission information. The interaction module is specifically configured to send the second metadata to the computing engine after the second permission information passes the authentication.

It should be noted that the management apparatus provided in the third aspect corresponds to the data processing method provided in the first aspect. Therefore, for technical effects of any one of the third aspect and the implementations of the third aspect, refer to technical effects of the first aspect or the corresponding implementations of the first aspect.

According to a fourth aspect, this application provides a computing device cluster. The computing device cluster includes at least one computing device, and the at least one computing device includes at least one processor and at least one memory. The at least one memory is configured to store instructions, and the at least one processor executes the instructions stored in the at least one memory, to enable the computing device cluster to perform the data processing method in any one of the first aspect or the possible implementations of the first aspect. It should be noted that the memory may be integrated into the processor, or may be independent of the processor. The at least one computing device may further include a bus. The processor is connected to the memory through the bus. The memory may include a readable memory and a random access memory.

According to a fifth aspect, this application provides a computer-readable storage medium. The computer-readable storage medium stores instructions. When the instructions are run on at least one computing device, the at least one computing device is enabled to perform the method in any one of the first aspect or the implementations of the first aspect.

According to a sixth aspect, this application provides a computer program product including instructions. When the computer program product runs on at least one computing device, the at least one computing device is enabled to perform the method in any one of the first aspect or the implementations of the first aspect.

In this application, based on the implementations provided in the foregoing aspects, the implementations may be further combined to provide more implementations.

### BRIEF DESCRIPTION OF DRAWINGS

To describe technical solutions in embodiments of this application more clearly, the following briefly introduces accompanying drawings used for describing embodiments. It is clear that the accompanying drawings in the following descriptions show merely some embodiments of this application, and a person of ordinary skill in the art may still derive other drawings from these accompanying drawings.
FIG. 1 is a diagram of a structure of an example data processing system according to this application;
FIG. 2 is a diagram of a data structure of a metadata model 1 built in a management apparatus 102 according to this application;
FIG. 3 is a diagram of a permission model 1 built in a management apparatus 102 according to this application;
FIG. 4 is a diagram of an example access control policy according to this application;
FIG. 5 is a diagram of a data structure of a metadata model 2 adapted to a computing engine 1012 according to this application;
FIG. 6 is a diagram of another data structure of a metadata model 2 adapted to a computing engine 1012 according to this application;
FIG. 7 is a diagram of a permission model 2 adapted to a computing engine 1012 according to this application;
FIG. 8 is another diagram of a permission model 2 adapted to a computing engine 1012 according to this application;
FIG. 9 is a diagram of establishing mapping between a metadata model 1 and a metadata model 2 according to this application;
FIG. 10 is a diagram of establishing mapping between a permission model 1 and a permission model 2 according to this application;
FIG. 11 is another diagram of establishing mapping between a permission model 1 and a permission model 2 according to this application;
FIG. 12 is a diagram of an access control policy defined for a metadata model 2 according to this application;
FIG. 13 is a diagram of another access control policy defined for a metadata model 2 according to this application;
FIG. 14 is a schematic flowchart of an example data processing method according to this application;
FIG. 15 is a diagram of a structure of a computing device according to this application; and
FIG. 16 is a diagram of a structure of a computing device cluster according to this application.

### DESCRIPTION OF EMBODIMENTS

The following describes the solutions in embodiments provided in this application with reference to the accompanying drawings in this application.

In the specification, claims, and the accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application.

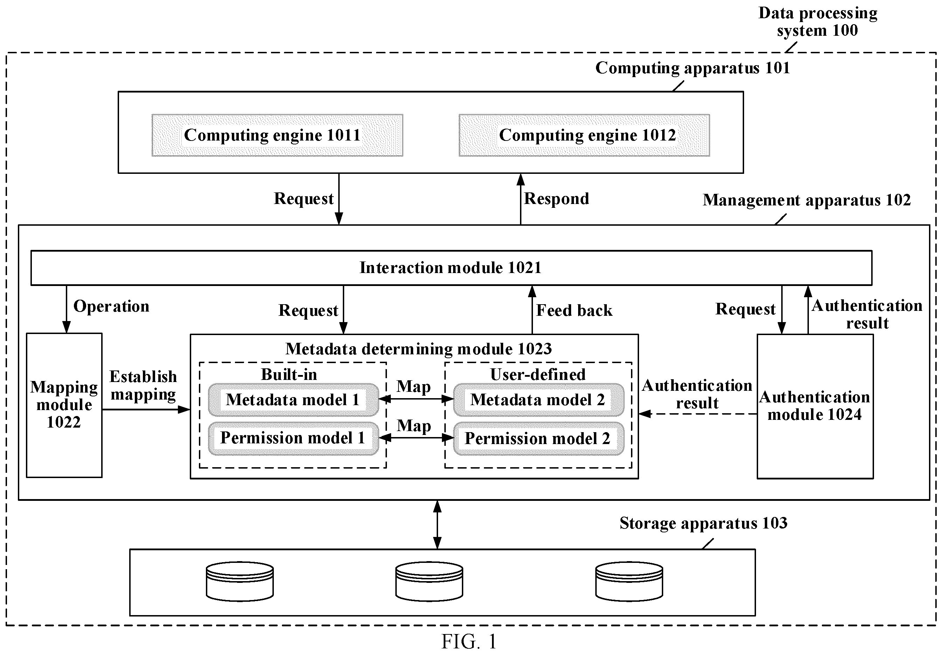

FIG. 1 is a diagram of a structure of an example data processing system. As shown in FIG. 1, the data processing system 100 includes a computing apparatus 101, a management apparatus 102, and a storage apparatus 103, and the computing apparatus 101, the management apparatus 102, and the storage apparatus 103 may be communicatively connected through a network.

The computing apparatus 101 may include one or more computing engines, for example, a structured query language (structured query language, SQL) computing engine, an artificial intelligence (artificial intelligence, AI) computing engine, or a third-party computing engine, and may be a computing engine of an open source community, or may be a computing engine for commercial use launched by a cloud vendor. The SQL computing engine is used as an example. The SQL computing engine may be specifically a Presto engine, a Hive engine, a Spark engine, a Clickhouse engine, or the like. In addition, these types of computing engines all have versions of the open source community and versions for the commercial use. For ease of understanding, in FIG. 1, an example in which the computing apparatus 101 includes a computing engine 1011 and a computing engine 1012 is used for description. The computing engine 1011 and the computing engine 1012 are different types of computing engines. In another embodiment, the computing apparatus 101 may include any quantity of computing engines and any type of computing engine. The computing apparatus 101 is configured to read and write data in the storage apparatus 103 by using the computing engine included in the computing apparatus 101.

A fixed metadata model 1 and a fixed permission model 1 are built in the management apparatus 102. The metadata model 1 and the permission model 1 are adapted to the storage apparatus 103, so that the management apparatus 102 can use the metadata model 1 to manage metadata corresponding to the data stored in the storage apparatus 103, and use the permission model 1 to authenticate a processing operation for the metadata. The metadata is used to describe attribute information of the data stored in the storage apparatus 103, for example, describe attribute information such as a catalog and a database to which the data belongs, a storage location and a storage format of the data, a used compression algorithm, and a partition (partition) to which the data belongs.

The storage apparatus 103 is configured to store data persistently, for example, store data uploaded by one or more users. During actual application, the storage apparatus 103 may store the data based on a data block format (data block format), a file (file) format, an object (object) format, or the like, or store the data in another storage manner such as columnar storage or a message queue. This is not limited in this embodiment.

When the computing engine (for example, the SQL computing engine 1011 or the AI computing engine 1012) in the computing apparatus 101 needs to access the data in the storage apparatus 103, the computing engine usually needs to first obtain the metadata corresponding to the data via the management apparatus 102, to access the data in the storage apparatus 103 based on the metadata. Based on this, when a computing engine is deployed in the computing apparatus 101, the computing engine is required to be adapted to the metadata model 1 and the permission model 1 that are built in the management apparatus 102. Otherwise, the computing engine cannot interact with the storage apparatus 103 via the management apparatus 102. Therefore, in an actual application scenario, some computing engines may perform a complex adaptation process to be connected to the management apparatus 102. Adaptation is difficult and time-consuming, and even some computing engines cannot be adapted to the metadata model 1 and the permission model 1 that are built in the management apparatus 102. This limits scalability of connecting the management apparatus 102 in the data processing system 100 to the computing engine.

Therefore, in this application, a metadata model 2 and a permission model 2 to which the computing engine can be adapted are respectively mapped to the metadata model 1 and the permission model 1 in the management apparatus 102, to connect the computing engine to the management apparatus 102. During specific implementation, as shown in FIG. 1, the metadata model 2 and the permission model 2 to which the computing engine can be adapted may be deployed in the management apparatus 102, and a mapping relationship 1 between the metadata model 2 and the metadata model 1 and a mapping relationship 2 between the permission model 2 and the permission model 1 are established. In this way, the computing engine in the computing apparatus 101 may be indirectly adapted, by using the metadata model 2 adapted to the computing engine, to the metadata model 1 built in the management apparatus 102, and indirectly adapted, by using the permission model 2 adapted to the computing engine, the permission model 1 built in the management apparatus 102, so that the computing engine can access the management apparatus 102. In this way, an adaptation limitation of the models built in the management apparatus 102 on the computing engine can be removed, and scalability of connecting the data processing system 100 to the computing engine can be improved. In addition, adaptation between the computing engine and the management apparatus 102 can be implemented only by deploying the metadata model 2 and the permission model 2 that are adapted to the computing engine in the management apparatus 102, and establishing mapping between these models and the models built in the management apparatus 102. In this way, adaptation difficulty of the computing engine can be effectively reduced, and time consumed for adaptation is reduced.

In an example, the data processing system 100 may be deployed on a cloud, and is configured to provide a user with a cloud service of data processing, for example, a cloud service of data computing or data storage. In this case, the computing apparatus 101, the management apparatus 102, and the storage apparatus 103 in the data processing system 100 may be separately implemented by using a cloud computing device or computing device cluster. The computing apparatus 101, the management apparatus 102, and the storage apparatus 103 may alternatively be deployed in a same computing device, or deployed in a same computing device cluster. In another example, the data processing system 100 may be deployed locally, to provide a user with a local data processing service.

During actual application, the computing apparatus 101 and the management apparatus 102 in the data processing system 100 may be separately implemented by using software or hardware.

The computing apparatus 101 is used as an example. As an example of a software functional unit, the computing apparatus 101 may include code running on a computing instance. The computing instance may include at least one of a host, a virtual machine, and a container. Further, there may be one or more computing instances. For example, the computing apparatus 101 may include code running on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is disposed in one region. A communication gateway needs to be disposed in each VPC for communication between two VPCs in a same region or cross-region communication between VPCs in different regions. Interconnection between VPCs is implemented through the communication gateway.

The computing apparatus 101 is used as an example of a hardware functional unit. The computing apparatus 101 may include at least one computing device, such as a server. Alternatively, the computing apparatus 101 may be a device implemented by using an application-specific integrated circuit (application-specific integrated circuit, ASIC), a device implemented by using a programmable logic device (programmable logic device, PLD), or the like. The PLD may be implemented by using a complex programmable logic device (complex programmable logic device, CPLD), a field programmable gate array (field programmable gate array, FPGA), generic array logic (generic array logic, GAL), a data processing unit (Data processing unit, DPU), or any combination thereof.

When the computing apparatus 101 may include a plurality of computing devices, the plurality of computing devices may be distributed in a same region, or may be distributed in different regions. The plurality of computing devices included in the computing apparatus 101 may be distributed in a same AZ, or may be distributed in different AZs. Similarly, the plurality of computing devices included in the computing apparatus 101 may be distributed in a same VPC, or may be distributed in a plurality of VPCs. The plurality of computing devices may be any combination of computing devices such as the server, the ASIC, the PLD, the CPLD, the FPGA, and the GAL.

The management apparatus 102 is similar to the computing apparatus 101. When being implemented by using software, the management apparatus 102 may be code running on a computing instance. When being implemented by using hardware, the management apparatus 102 may include one or more computing devices.

The storage apparatus 103 is implemented by using hardware, and may include at least one storage device having a data storage capability, for example, may include one or more storage servers, or may include a device having a persistent storage medium. The persistent storage device may be, for example, a hard disk (for example, an SSD or an HDD).

It should be noted that the data processing system 100 shown in FIG. 1 is merely used as an example for description. During actual application, the data processing system 100 may alternatively have another implementation. For example, the management apparatus 102 in the data processing system 100 may include a larger quantity or more types of metadata models and permission models; or the metadata model 2 and the permission model 2 that are adapted to the computing engine in the computing apparatus 101 may be configured outside the management apparatus 102, for example, configured in the computing apparatus 101. This is not limited in this embodiment.

For ease of understanding, the following describes in detail various non-limiting specific implementations of a data processing process in the data processing system 100.

In an initial state, the metadata model 1 and the permission model 1 are fixedly configured in the management apparatus 102 in the data processing system 100. The metadata model 1 and the permission model 1 may be, for example, a metadata model and a permission model that are adapted to an open source Hive engine.

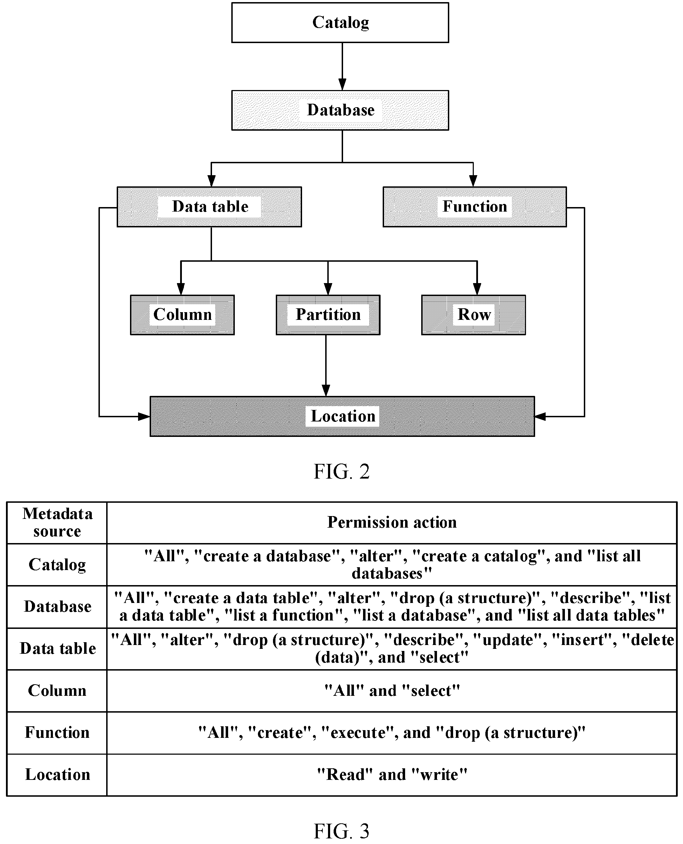

In an example, the metadata model 1 built in the management apparatus 102 uses, for example, a metadata structure shown in FIG. 2. As shown in FIG. 2, the metadata model includes information such as a catalog (catalog), a database (database), a data table (table), a function (function), a column (column), a partition (partition), a row (row), and location (location).

The catalog is a top-level data structure resource in the storage apparatus 103, that is, a largest namespace. Usually, one catalog may include Ni databases, where Ni is a natural number.

The database is a lower-level data structure resource of the catalog. Lower-level data structure resources of the database include the data table and the function, and one database may include N₂ data tables and N₃ functions, where both N₂ and N₃ are natural numbers.

The data table usually includes a view (view) and an index (index), and is a lower-level data structure resource of the database. A lower-level data structure resource of the data table includes two dimensions. One dimension is a vertical data organization "column", and the other dimension is a horizontal data organization "partition" or "row". The data table and the lower-level data structure resource "partition" of the data table are both mapped to the "location", where the "location" indicates a storage location of underlying data of the data table and the partition in the storage apparatus 103.

The function includes a built-in function and a user-defined scalar function (user-defined scalar function, UDF), is a lower-level data structure resource of the database, and is mapped to the "location". The "location" also indicates a storage location of underlying data of a software package (JAR package) of a function implementation class (such as a Java implementation class).

During actual application, the metadata model 1 may alternatively use another metadata structure adapted to the storage apparatus 103. This is not limited in this embodiment.

In an example, the permission model 1 built in the management apparatus 102 may be, for example, shown in FIG. 3.

Permission corresponding to the catalog may include "all (all)", "create a database (create database)", "alter (alter)", "create a catalog (create catalog)", "list all databases (list all database)", and the like.

Permission corresponding to the database may include "all", "create a data table (create table)", "alter", "drop (drop, drop a structure)", "describe (describe)", "list a data table (list table)", "list a function (list function)", "list a database (list database)", "list all data tables (list all table)", and the like.

Permission corresponding to the data table may include "all", "alter", "drop (a structure)", "describe", "update (update)", "insert (insert)", "delete (delete, delete data)", "select (select)", and the like.

Permission corresponding to the column may include "all", "select", and the like.

Permission corresponding to the function may include "all", "create (create)", "execute (execute)", "drop (a structure)", and the like.

Permission corresponding to the location may include "read (read)", "write (write)", and the like.

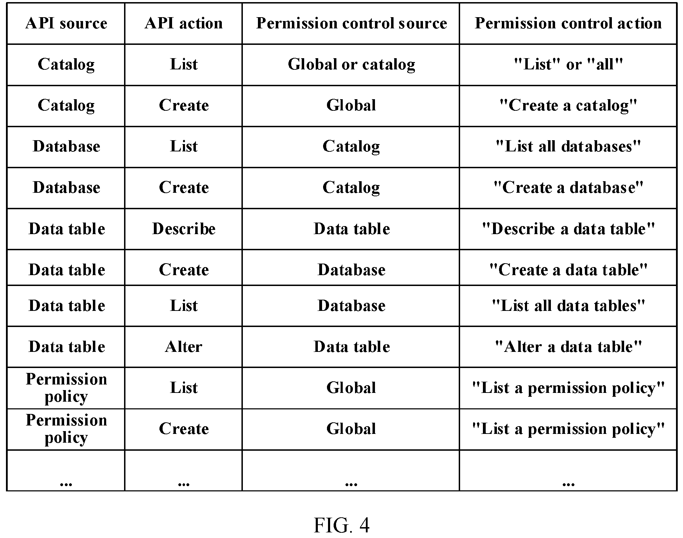

Further, the management apparatus 102 may include an access control policy for the metadata model 1 and the permission model 1, where the access control policy indicates permission content required by the computing engine to invoke an application programming interface (application programming interface, API) to access the metadata in the management apparatus 102. For example, the access control policy may be shown in FIG. 4.

To perform a list (list) operation on the catalog, in other words, to perform list selection on one or more specified catalogs or all specified catalogs, required permission is permission of "list" or permission of "all".

To perform a create (create) operation on the catalog, in other words, to create a defined catalog, required permission is global-level permission of "create a catalog".

To perform a list operation on the database, in other words, to perform list selection on all databases, permission of "list all databases" for a target to which the database belongs is required.

To perform a create operation on the database, in other words, to create a defined database, permission of "create a database" for a target to which the database belongs is required.

To perform a describe (describe) operation on the data table, in other words, to select one or more specified data tables, permission of "describe a data table" for the data table is required.

To perform a create operation on the database, in other words, to create a defined data table, permission of "create a data table" for a database to which the data table belongs is required.

To perform a list operation on the database, in other words, to perform list selection on all data tables, permission of "list all data tables" for a database to which the data table belongs is required.

To perform an alter (alter) operation on the data table, in other words, to alter one or more specified data tables, permission of "alter a data table" for the data table is required.

To perform a list operation on a permission policy, in other words, to perform list selection on all permission policies, global-level permission of "list a permission policy" is required, where the permission policy indicates an allowed operation, an operation object, and a subject that requests to perform the operation.

To perform a create operation on a permission policy, in other words, to create a defined permission policy, global-level permission of "create a permission policy" is required.

When a computing engine is deployed in the computing apparatus 101, assuming that the deployed computing engine 1011 can be adapted to the metadata model 1 and the permission model 1, where for example, the computing engine 1011 is a Hive engine, the computing engine 1011 can access the management apparatus 102 based on the metadata model 1 and the permission model 1, so that the computing engine 1011 can be connected to the management apparatus 102 without an additional configuration operation.

When the computing engine 1012 is deployed in the computing apparatus 101, the computing engine 1012 is not adapted to the metadata model 1 and the permission model 1 built in the management apparatus 102. For example, the computing engine 1012 may be a Presto engine. In this case, the metadata model 2 and the permission model 2 that are adapted to the computing engine 1012 are deployed in the management apparatus 102, and the mapping relationship 1 between the metadata model 2 and the metadata model 1 and the mapping relationship 2 between the permission model 2 and the permission model 1 are established.

The deployed metadata model 2 and the deployed permission model 2 may be user-defined models, or may be known models that are adapted to the computing engine 1012.

For example, the user may request to deploy the computing engine 1012 in the data processing system 100, and provide the data processing system 100 with the user-defined metadata model 2 and the user-defined permission model 2 that are for the computing engine 1012.

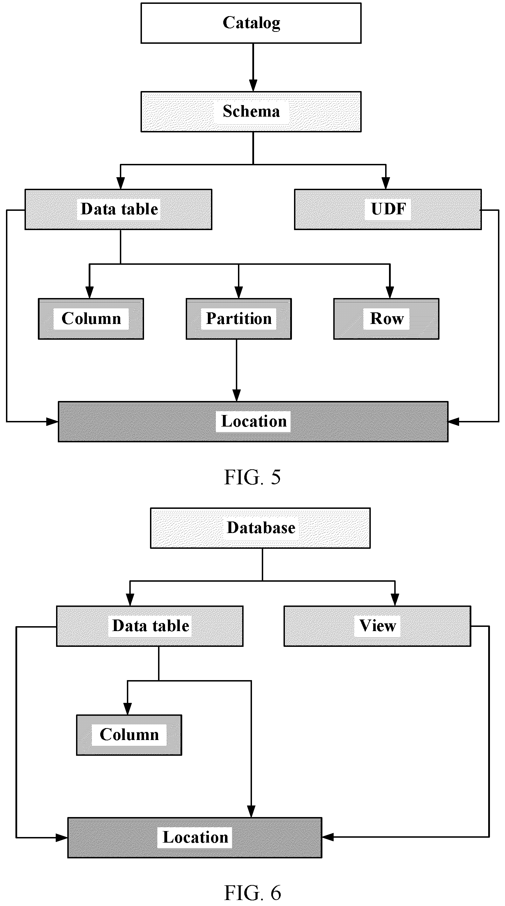

For example, the user-defined metadata model may use a metadata structure shown in FIG. 5. The metadata model 2 includes a catalog, a schema (schema), a data table, a UDF (user-defined scalar function), a column, a partition, a row, and a location. Alternatively, the user-defined metadata model may use a metadata structure shown in FIG. 6. The metadata model 2 includes a database, a data table, a view, a row, and a location.

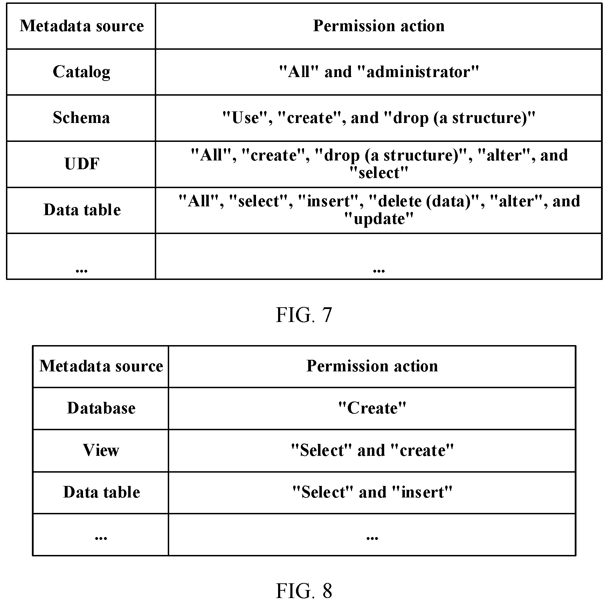

In addition, the user may further define a permission model 2 shown in FIG. 7. In this case, permission corresponding to the catalog may include "all" or "administrator (administrator)". Permission corresponding to the schema includes "use (use)", "create", "drop (a structure)", and the like. Permission corresponding to the UDF includes "all", "create", "drop (a structure)", "alter", "select", and the like. Permission corresponding to the data table includes "all", "select", "insert", "delete (data)", "alter", "update", and the like (where permission corresponding to other metadata is not shown).

Alternatively, the user defines a permission model 2 shown in FIG. 8. In this case, permission corresponding to the database may include "create". Permission corresponding to the view may include "select", "create", and the like. Permission corresponding to the data table may include "select", "insert", and the like (where permission corresponding to other metadata is not shown).

Then, the user may define the mapping relationship 1 between the metadata model 2 and the metadata model 1 built in the management apparatus 102.

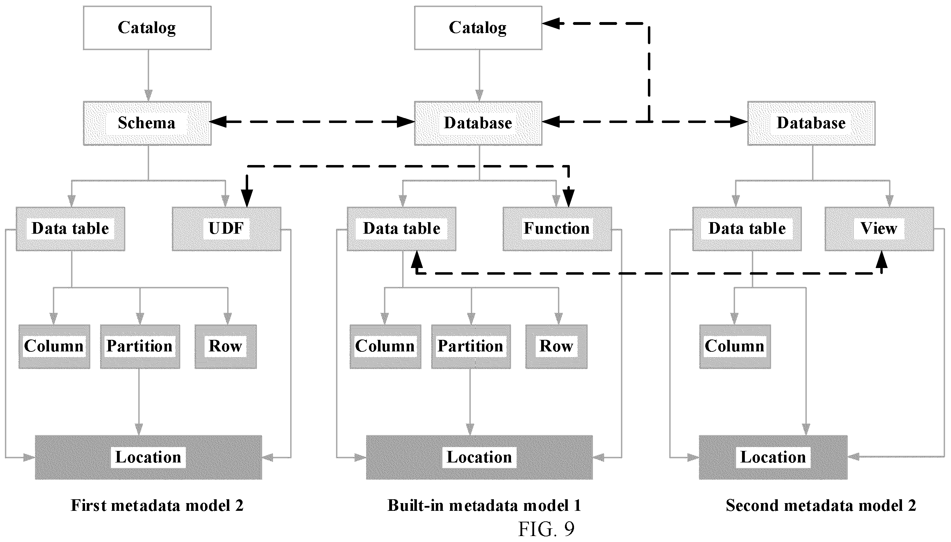

During specific implementation, the data processing system 100 may present a client externally. The client may be, for example, an application program running on a user-side device, or may be a network browser provided by the data processing system 100 externally. The management apparatus 102 may include an interaction module 1021 and a mapping module 1022, where the interaction module 1021 may output a configuration page to the client, and the client presents the configuration page to the user. In this way, the user may perform a first operation on the configuration page to establish the mapping relationship 1 between the metadata model 2 and the metadata model 1. Specifically, the interaction module 1021 feeds back the first operation performed by the user to the mapping module 1022, and the mapping module 1022 establishes mapping between a metadata level in the metadata model 2 and an equivalent metadata level in the metadata model 1 based on the first operation. As shown by dashed lines in FIG. 9, for the metadata model 2 shown in FIG. 5, based on the first operation performed by the user, the mapping module 1022 may establish mapping between a "schema" level in the metadata model 2 and a "database" level in the metadata model 1, or may establish mapping between a "UDF" level in the metadata model 2 and a "function" level in the metadata model 1. When the metadata model 2 uses the metadata structure shown in FIG. 6, based on the first operation performed by the user, the mapping module 1022 may separately establish mapping between a "database" level in the metadata model 2 and a "catalog" level and a "database" level in the metadata model 1, or may establish mapping between a "view" level in the metadata model 2 and a "data table" level in the metadata model 1. Then, the mapping module 1022 also maps other metadata levels in the two metadata models based on the mapped levels.

The user-defined metadata model 2 and the metadata model 1 built in the management apparatus 102 may be different in terms of metadata structures in addition to names of metadata levels. Therefore, in a process of establishing the mapping relationship 1, the mapping module 1022 may directly map an attribute that exists in the metadata model 2 but does not exist in the metadata model 1 to an existing attribute (namely, an existing metadata level, where the following is the same) in the metadata model 1; and map an attribute that does not exist in the metadata model 2 but exists in the metadata model 1 to an existing attribute in the metadata model 2.

In addition, the mapping module 1022 further establishes the mapping relationship 2 between the permission model 2 and the permission model 1 built in the management apparatus 102.

During specific implementation, the user may perform, on the configuration page presented on the client, a second operation for the mapping relationship between the permission models. The interaction module 1021 may feed back the second operation to the mapping module 1022, and the mapping module 1022 establishes, based on the second operation, the mapping relationship 2 between operation permission corresponding to each metadata level in the metadata model 2 and operation permission corresponding to each metadata level in the metadata model 1.

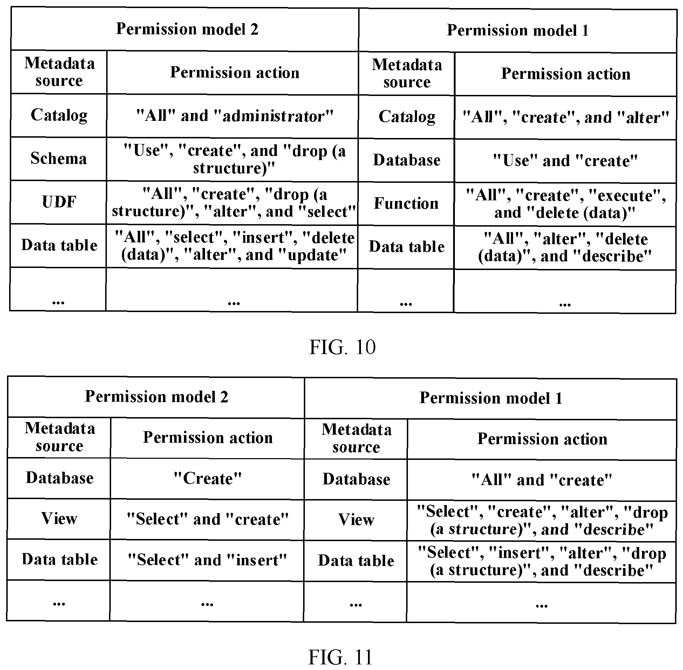

For example, as shown in FIG. 10, the mapping module 1022 may establish a mapping relationship between the permission model 2 shown in FIG. 7 and the permission model 1. Mapping may be established between the operation permission of "all" and "administrator" for the catalog in the permission model 2 and the operation permission of "all", "create a database", and "alter" in the permission model 1. In addition, a one-to-one mapping relationship, a many-to-one mapping relationship, or a one-to-many mapping relationship may be established between the operation permission for the catalog in the permission model 2 and the operation permission for the catalog in the permission model 1, and may be specifically set based on an actual application requirement. This is not limited in this embodiment. A mapping relationship between operation permission corresponding to other metadata levels may also be established in a similar manner.

For another example, as shown in FIG. 11, the mapping module 1022 may establish a mapping relationship between the permission model 2 shown in FIG. 8 and the permission model 1. A mapping relationship may be established between the operation permission of "select" and "insert" for the data table in the permission model 2 and the operation permission of "select", "insert", "drop (a structure)", and "describe" in the permission model 1. In addition, all operation permission in the permission model 1 may be mapped based on an actual application requirement, or only some operation permission may be mapped. For example, only a one-to-one mapping relationship between the operation permission of "select" and "insert" for the data table in the permission model 2 and the operation permission of "select" and "insert" in the permission model 1 may be established. A mapping relationship between operation permission corresponding to other metadata levels may also be established in a similar manner.

During actual application, in addition to the configuration page, the user may alternatively provide the management apparatus 102 with the metadata model 2, the permission model 2, and the mapping relationships between the models through an API interface, a software development kit (software development kit, SDK), a command line, template import, or the like. This is not limited in this embodiment.

In a further possible implementation, the user may further define, for the to-be-deployed computing engine 1012, an access control policy for invoking the metadata model 2 and the permission model 2. During specific implementation, the user may perform a third operation for the access control policy on the configuration page presented on the client. The interaction module 1021 may feed back the third operation to the mapping module 1022, and the mapping module 1022 creates a corresponding access control policy based on the third operation. Specifically, for an API that provides add/drop/alter/select at each metadata level in the metadata model 2, a permission requirement of the API at the metadata level or an upper level of the metadata level is defined based on the permission model 2 corresponding to the metadata model 2, to generate a corresponding access control policy. Further, for an API that provides add/drop/alter/select for a permission policy corresponding to the permission model 2, the mapping module 1022 may define a permission requirement of the API based on the permission model 2, to generate a corresponding access control policy.

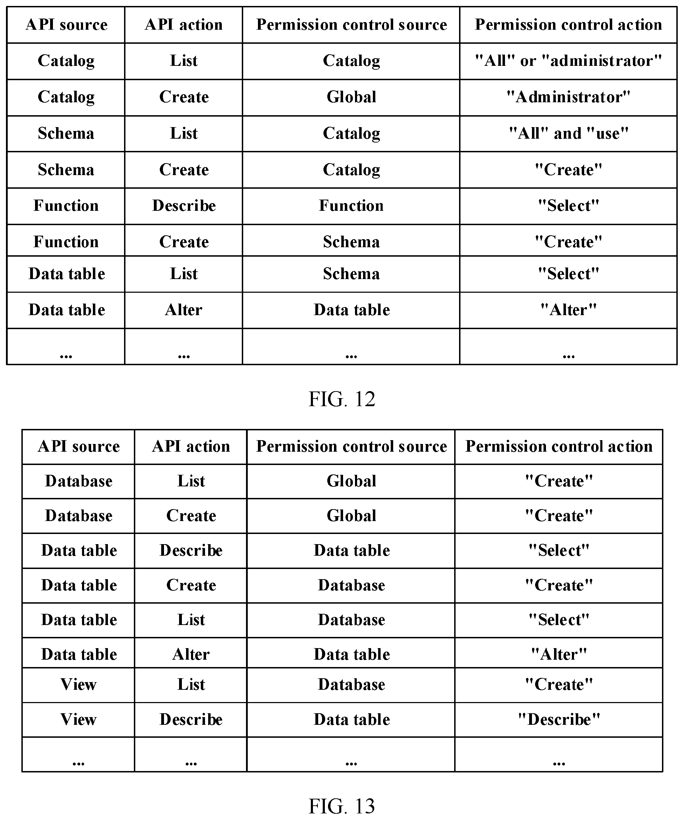

For example, when the metadata model 2 uses the metadata structure shown in FIG. 5, the access control policy generated by the mapping module 1022 based on the third operation may be shown in FIG. 12.

To perform a list operation on the catalog, in other words, to perform list selection on one or more specified catalogs or all specified catalogs, required permission is permission of "all" or permission of "administrator".

To perform a create operation on the catalog, in other words, to create a defined catalog, required permission is global-level permission of "administrator".

To perform a list operation on the schema, in other words, to perform list selection on one or more specified schemas or all specified schemas, permission of "all" or permission of "use" for a catalog to which the schema belongs is required.

To perform a create operation on the schema, in other words, to create a defined schema, permission of "create" for a catalog to which the schema belongs is required.

To perform a describe operation on the UDF, in other words, to select one or more specified UDFs, permission of "select" for the UDF is required.

To perform a create operation on the UDF, in other words, to create a defined UDF, permission of "create" for a schema to which the UDF belongs is required.

To perform a list operation on the data table, in other words, to perform list selection on all data tables, permission of "select" for a schema to which the data table belongs is required.

To perform an alter operation on the data table, in other words, to alter one or more specified data tables, permission of "alter" for the data table is required.

For another example, when the metadata model 2 uses the metadata structure shown in FIG. 6, the access control policy generated by the mapping module 1022 based on the third operation may be shown in FIG. 13.

To perform a list operation on the database, in other words, to perform list selection on one or more specified databases or all specified databases, required permission is global-level permission of "create".

To perform a create operation on the data table, in other words, to create a defined database, global-level permission of "create" is required.

To perform a describe operation on the database, in other words, to perform description selection on one or more specified data tables, permission of "select" for the data table is required.

To perform a create operation on the data table, in other words, to create a defined data table, permission of "create" for a database to which the data table belongs is required.

To perform a list operation on the data table, in other words, to select one or more specified data tables, permission of "select" for a database to which the data table belongs is required.

To perform an alter operation on the data table, in other words, to alter one or more specified data tables, permission of "alter" for the data table is required.

To perform a list operation on the view, in other words, to perform list selection on all views, permission of "create" for a database to which the view belongs is required.

To perform a describe operation on the view, in other words, to select one or more specified data tables, permission of "describe" for the data table is required.

During actual application, the access control policy defined by the mapping module 1022 based on the third operation performed by the user may alternatively be an access control policy in another implementation. This is not limited in this embodiment.

After configuring the metadata model 2, the permission model 2, and the mapping relationships between the models (and the access control policy), the management apparatus 102 may provide the computing engine 1012 with the corresponding metadata for accessing the data in the storage apparatus 103, or store metadata corresponding to data written by the computing engine 1012 into the storage apparatus 103. The following separately describes the two processes in detail.

When the computing engine 1012 needs to read data (referred to as target data below) stored in the storage apparatus 103, the computing engine 1012 may generate an access request for metadata of the to-be-read target data, and send the access request to the management apparatus 102. Specifically, API interfaces of the metadata model 2 and the permission model 2 in the management apparatus 102 may be invoked, so that the management apparatus 102 can receive the access request through the API interface.

The management apparatus 102 includes the interaction module 1021, a metadata determining module 1023, and an authentication module 1024, as shown in FIG. 1. After receiving the access request sent by the computing engine 1012, the interaction module 1021 may provide the access request for the metadata determining module 1023 and the authentication module 1024. The metadata determining module 1023 determines the metadata corresponding to the target data based on the metadata model 2 and the metadata model 1 in response to the access request, and feeds back the metadata to the interaction module 1021. In addition, the authentication module 1024 authenticates the access request based on the permission model 2 and the permission model 1, and feeds back an authentication result to the interaction module 1021. When the authentication result indicates that the access request passes the authentication, the interaction module 1021 sends the metadata corresponding to the target data to the computing engine 1012.

In a possible implementation, the access request received by the interaction module 1021 carries indication information for the target data, an execution operation, and an identifier of the computing engine 1012. In this way, in response to the access request, the metadata determining module 1023 may specifically determine, based on the indication information carried in the access request, the metadata to be accessed by the computing engine 1012. For ease of differentiation, the metadata is referred to as first metadata below. Because the first metadata meets the metadata model 1, and the metadata model 1 is not adapted to the computing engine 1012, the metadata determining module 1023 may translate, based on the mapping relationship 1 between the metadata model 1 and the metadata model 2, the first metadata into second metadata that meets the metadata model 2. It may be understood that the metadata model 2 is adapted to the computing engine 1012. Therefore, the computing engine 1012 can identify the second metadata based on the data structure used by the metadata model 2.

In this embodiment, after generating the second metadata, the management apparatus 102 does not directly send the second metadata to the computing engine 1012, but sends the second metadata to the computing engine only when the access request passes the authentication. During specific implementation, the authentication module 1024 in the management apparatus 102 determines first permission information carried in the access request. The first permission information may include the identifier of the computing engine 1012, an operation (select) requested to be performed, and the indication information of the target data (namely, the metadata corresponding to the target data). In addition, usually, the first permission information is permission information that meets the permission model 2. Therefore, the authentication module 1024 may translate, based on the mapping relationship 2 between the permission model 2 and the permission model 1, the first permission information into second permission information that meets the permission model 1, and authenticate the second permission information by using a pre-configured permission policy (and the access control policy), to determine whether the computing engine 1012 has permission to perform the operation on the metadata, generate the authentication result for the access request, and feed back the authentication result to the interaction module 1021. In this way, when the authentication result indicates that the access request passes the authentication, the interaction module 1021 sends, to the computing engine 1012, the second metadata obtained by the metadata determining module 1023 through translation; or when the authentication result indicates that the access request does not pass the authentication, the interaction module 1021 may feed back, to the computing engine 1012, response information indicating a request failure or an authentication failure.

In the foregoing implementation, an example in which the metadata determining module 1023 and the authentication module 1024 perform operations of generating the second metadata and authenticating the access request in parallel is used for description. In another possible implementation, the authentication module 1024 may first authenticate the access request, and feed back the authentication result to the metadata determining module 1023. The metadata determining module 1023 performs a process of generating the second metadata only when determining that the authentication result indicates that the access request passes the authentication.

After obtaining the second metadata corresponding to the target data, the computing engine 1012 may access, based on the second metadata, the target data stored in the storage apparatus 103. For example, the computing engine 1012 may directly access the storage apparatus 103 based on the second metadata, to obtain the to-be-read target data; or the computing engine 1012 may invoke, based on the second metadata, a data API interface provided by the management apparatus 102 externally, to indirectly access, through the data API interface, the target data stored in the storage apparatus 103. This is not limited in this embodiment.

Further, the computing engine 1012 may request to access the permission policy in the management apparatus 102. During specific implementation, the computing engine 1012 may generate an access request for a target permission policy in the management apparatus 102, where the access request includes the identifier of the computing engine 1012, indication information of the target permission policy, and an operation (select) for the target permission policy; and the computing engine 1012 may send the access request to the interaction module 1021. The interaction module 1021 provides the access request for the authentication module 1024. The authentication module 1024 may authenticate the access request based on a permission configuration for the permission policy, to determine whether the computing engine 1012 has permission to access the target permission policy built in the management apparatus 102. Therefore, after determining that the access request passes the authentication, the authentication module 1024 may translate the target permission policy into a permission policy that meets the permission model 2, and feed back the permission policy to the interaction module 1021, so that the interaction module 1021 sends the permission policy to the computing engine 1012.

When the computing engine 1012 needs to store new data in the storage apparatus 103, the computing engine 1012 may generate metadata corresponding to the new data based on a storage plan for the new data. For ease of description, the metadata is referred to as original metadata below, and the original metadata is usually metadata that meets the metadata model 2. Then, the computing engine 1012 may generate a metadata update request including the original metadata (where the metadata update request may further include the identifier of the computing engine 1012 and an operation requested to be performed), and send the metadata update request to the interaction module 1021 in the management apparatus 102.

The interaction module 1021 may provide the received metadata update request for the authentication module 1024 and the metadata determining module 1023.

The authentication module 1024 may first authenticate the metadata update request, and specifically, may determine third permission information carried in the metadata update request. The third permission information may include the identifier of the computing engine 1012, the operation (for example, alter or create) requested to be performed, and the original metadata. Therefore, the authentication module 1024 may translate, based on the mapping relationship 2 between the permission model 2 and the permission model 1, the third permission information into fourth permission information that meets the permission model 1, and authenticate the fourth permission information by using a pre-configured permission policy (and the access control policy), to determine whether the computing engine 1012 has permission to perform the operation on the original metadata, generate an authentication result for the metadata update request, and feed back the authentication result to the metadata determining module 1023.

In addition, when determining that the authentication result indicates that the metadata update request passes the authentication, the metadata determining module 1023 translates, based on the mapping relationship 1 between the metadata model 2 and the metadata model 1, the original metadata carried in the metadata update request into target metadata that meets the metadata model 1, and updates the target metadata to the management apparatus 102. Specifically, the target metadata may be persistently stored in the management apparatus 102.

In the foregoing implementation, an example in which the metadata determining module 1023 performs a process of translating the original metadata after determining that the metadata update request passes the authentication is used for description. In another possible implementation, the metadata determining module 1023 and the authentication module 1024 may perform processes of translating the metadata and requesting authentication in parallel. This is not limited in this embodiment.

After the management apparatus 102 persistently stores the target metadata, the computing engine 1012 may write the new data into the storage apparatus 103 based on the original metadata or the target metadata. The computing engine 1012 may directly access the storage apparatus 103, and write the new data into the storage apparatus 103; or the computing engine 1012 may invoke the data API interface provided by the management apparatus 102 externally, and indirectly write the new data into the storage apparatus 103 via the management apparatus 102.

In this way, the computing engine 1012 deployed in the computing apparatus 102 may be adapted, by using the metadata model 2 and the permission model 2 that are adapted to the computing engine 1012, to the metadata model 1 and the permission model 1 that are built in the management apparatus 102, so that the computing engine 1012 reads and writes the data in the storage apparatus 103 via the management apparatus 102.

In a further application scenario, the computing apparatus 101 includes a plurality of computing engines (for example, the computing engine 1011 and the computing engine 1012 in FIG. 1), and the management apparatus 102 includes a metadata model and a permission model that are adapted to each of the plurality of computing engines, for example, the foregoing metadata model 1 and metadata model 2 and the foregoing permission model 1 and permission model 2. In addition, data sharing between different computing engines may be implemented by establishing mapping between different metadata models and mapping between different permission models. The computing engine 1011 and the computing engine 1012 are used as an example. The computing engine 1012 may write the new data into the storage apparatus 103 by using the metadata model 2 and the permission model 2, and the computing engine 1011 may write the new data into the storage apparatus 103 by using the metadata model 1 and the permission model 1. Because the mapping relationship 1 exists between the metadata model 2 and the metadata model 1, and the mapping relationship 2 exists between the permission model 2 and the permission model 1, the computing engine 1011 may access, based on the mapping relationship 1 between the metadata models and the mapping relationship 2 between the permission models, the data written (or the data table created) by the computing engine 1012. The computing engine 1012 may access, based on the mapping relationship 1 between the metadata models and the mapping relationship 2 between the permission models, the data written (or the data table created) by the computing engine 1011.

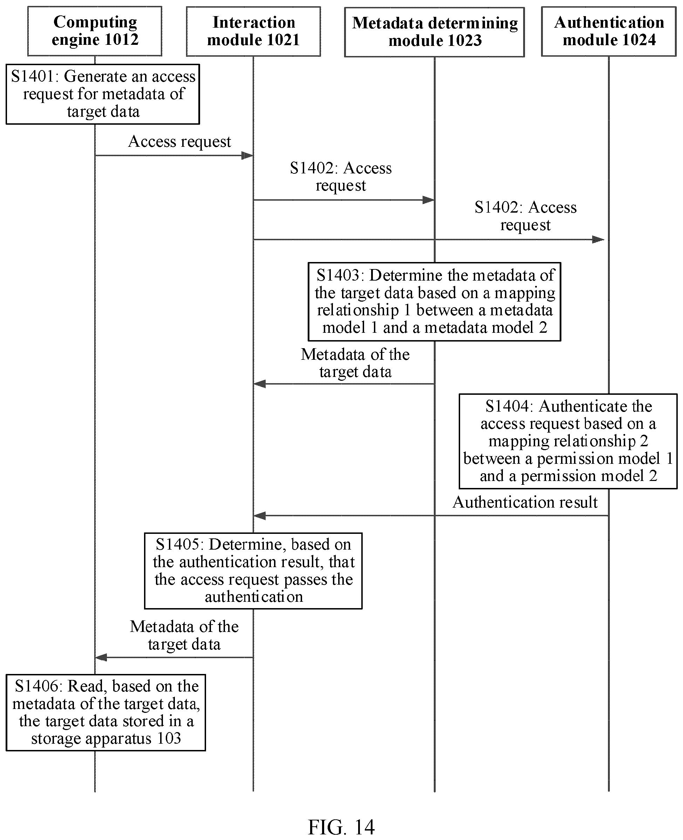

FIG. 14 is a schematic flowchart of a data processing method according to an embodiment of this application. The method may be applied to the data processing system 100 shown in FIG. 1, or may be applied to another applicable application scenario. The following uses an example in which the method is applied to the data processing system 100 shown in FIG. 1 for description. In this embodiment, an operation performed by a computing apparatus 101 is specifically performed by a computing engine 1012 in the computing apparatus 101, and an operation performed by a management apparatus 102 is specifically performed by a plurality of function modules included in the management apparatus 102.

The data processing method shown in FIG. 14 may specifically include the following steps.

S1401: The computing engine 1012 generates an access request for metadata of target data, and sends the access request to an interaction module 1021.

S1402: The interaction module 1021 separately provides the access request for a metadata determining module 1023 and an authentication module 1024.

S1403: The metadata determining module 1023 determines the metadata of the target data based on a mapping relationship 1 between a metadata model 1 and a metadata model 2 in response to the access request, and feeds back the metadata of the target data to the interaction module 1021, where the metadata model 2 is adapted to the computing engine 1012, and the determined metadata of the target data meets the metadata model 2.

During specific implementation, the mapping relationship 1 exists between the metadata model 1 and the metadata model 2. Therefore, after determining the metadata corresponding to the target data based on the access request, the metadata determining module 1023 may translate, based on the mapping relationship 1, metadata that meets a data structure of the metadata model 1 into metadata that meets a data structure of the metadata model 2 (that is, the metadata of the target data). The mapping relationship 1 between the metadata model 1 and the metadata model 2 may be pre-established by a mapping module 1022 in the management apparatus 102. For a specific implementation process of establishing the mapping relationship 1 by the mapping module 1022, refer to related descriptions in the foregoing embodiment. Details are not described herein again.

S1404: The authentication module 1024 authenticates the access request based on a mapping relationship 2 between a permission model 1 and a permission model 2, and feeds back an authentication result to the interaction module 1021, where the permission model 2 is adapted to the computing engine 1012.

During specific implementation, the authentication module 1024 may determine first permission information carried in the access request. The first permission information may include, for example, an identifier of the computing engine 1012, an operation requested to be performed, and indication information of the target data, and the first permission information is permission information that meets the permission model 2. Therefore, the authentication module 1024 may translate, based on the mapping relationship 2 between the permission model 2 and the permission model 1, the first permission information into second permission information that meets the permission model 1, and authenticate the second permission information by using a pre-configured permission policy, to determine whether the computing engine 1012 has permission to perform the operation on the metadata, generate the authentication result for the access request, and feed back the authentication result to the interaction module 1021. The mapping relationship 2 between the permission model 1 and the permission model 2 may be pre-established by the mapping module 1022. For a specific implementation process of establishing the mapping relationship 2 by the mapping module 1022, refer to related descriptions in the foregoing embodiment. Details are not described herein again.

S1405: After determining, based on the authentication result, that the access request passes the authentication, the interaction module 1021 sends the metadata of the target data to the computing engine 1012.

S1406: The computing engine 1012 reads, based on the metadata of the target data, the target data stored in the storage apparatus 103.

The computing engine 1012 may directly access the storage apparatus 103 based on the metadata, to read the target data in the storage apparatus 103; or the computing engine 1012 may invoke a data API interface provided by the management apparatus 102 externally, and indirectly read the target data in the storage apparatus 103 via the management apparatus 102.

It should be noted that an execution sequence of steps shown in this embodiment is not used for limitation. In another embodiment, an execution sequence of different steps may alternatively be implemented in another manner. For example, in another embodiment, step S1403 and step S1404 may be performed simultaneously. Alternatively, the authentication module 1024 may first authenticate the access request, and provide the generated authentication result for the metadata determining module 1023; and then, after determining, based on the authentication result, that the access request passes the authentication, the metadata determining module 1023 translates the metadata that meets the metadata model 1 into the metadata that meets the metadata model 2.

In addition, the data processing method provided in this embodiment corresponds to the data processing system 100 shown in FIG. 1. Therefore, for a specific implementation process of step S1401 to step S1406, refer to related descriptions in the foregoing embodiment. Details are not described herein again.

In this embodiment, an example in which the computing engine 1012 reads the target data in the storage apparatus 103 is used for description. When the computing engine 1012 writes new data into the storage apparatus 103, first, the computing engine 1012 may generate original metadata corresponding to the new data based on a storage plan for the new data, where the original metadata meets the metadata model 2 adapted to the computing engine 1012. Then, the computing engine 1012 may generate a metadata update request including the original metadata (where the metadata update request may further include the identifier of the computing engine 1012 and the operation requested to be performed), and send the metadata update request to the interaction module 1021 in the management apparatus 102. The interaction module 1021 may provide the received metadata update request for the authentication module 1024 and the metadata determining module 1023. Then, the authentication module 1024 may first authenticate the metadata update request, and specifically, may determine third permission information carried in the metadata update request. The third permission information may include the identifier of the computing engine 1012, the operation (for example, alter or create) requested to be performed, and the original metadata, and the third permission information meets the permission model 2. Then, the authentication module 1024 may translate, based on the mapping relationship 2 between the permission model 2 and the permission model 1, the third permission information into fourth permission information that meets the permission model 1, and authenticate the fourth permission information by using a pre-configured permission policy, to determine whether the computing engine 1012 has permission to perform the operation on the original metadata, generate an authentication result for the metadata update request, and feed back the authentication result to the metadata determining module 1023. Then, when determining that the authentication result indicates that the metadata update request passes the authentication, the metadata determining module 1023 translates, based on the mapping relationship 1 between the metadata model 2 and the metadata model 1, the original metadata carried in the metadata update request into target metadata that meets the metadata model 1, and updates the target metadata to the management apparatus 102. Specifically, the target metadata may be persistently stored in the management apparatus 102. Finally, the computing engine 1012 may write the new data into the storage apparatus 103 based on the original metadata or the target metadata.

In embodiments shown in FIG. 1 to FIG. 14, the management apparatus 102 (including the interaction module 1021, the mapping module 1022, the metadata determining module 1023, and the authentication module 1024) in the data processing process may be software configured in a computing device or a computing device cluster. In addition, the computing device or the computing device cluster may implement a function of the management apparatus 102 by running the software on the computing device or the computing device cluster. The following describes in detail the management apparatus 102 in the data processing process from a perspective of hardware device implementation.

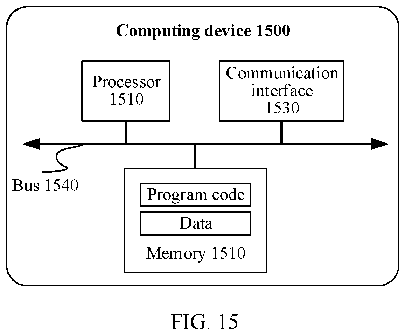

FIG. 15 shows a diagram of a structure of a computing device. The management apparatus 102 may be deployed on a computing device. The computing device may be a computing device (for example, a server) in a cloud environment, a computing device in an edge environment, the terminal device or the like, and may be specifically configured to implement functions of the interaction module 1021, the mapping module 1022, the metadata determining module 1023, and the authentication module 1024 in the embodiment shown in FIG. 1.

As shown in FIG. 15, the computing device 1500 includes a processor 1510, a memory 1520, a communication interface 1530, and a bus 1540. The processor 1510, the memory 1520, and the communication interface 1530 communicate with each other through the bus 1540. The bus 1540 may be a peripheral component interconnect (peripheral component interconnect, PCI) bus, an extended industry standard architecture (extended industry standard architecture, EISA) bus, or the like. The bus may include an address bus, a data bus, a control bus, or the like. For ease of representation, only one thick line is used to represent the bus in FIG. 15, but this does not mean that there is only one bus or only one type of bus. The communication interface 1530 is configured to communicate with the outside, for example, obtain an access request, and feed back metadata of target data.

The processor 1510 may be a central processing unit (central processing unit, CPU), an application-specific integrated circuit (application-specific integrated circuit, ASIC), a graphics processing unit (graphics processing unit, GPU), or one or more integrated circuits. The processor 1510 may be an integrated circuit chip and has a signal processing capability. In an implementation process, functions of the modules in the foregoing management apparatus 102 may be completed by using an integrated logic circuit of hardware in the processor 1510, or by using instructions in a form of software. The processor 1510 may alternatively be a general-purpose processor, a data signal processor (digital signal processor, DSP), a field programmable gate array (field programmable gate array, FPGA) or another programmable logic device, a discrete gate or transistor logic device, or a discrete hardware component, and may implement or perform the methods, steps, and logical block diagrams disclosed in embodiments of this application. The general-purpose processor may be a microprocessor, or the processor may be any conventional processor or the like. The method disclosed with reference to embodiments of this application may be directly performed and completed by a hardware decoding processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 1520. The processor 1510 reads information in the memory 1520, and completes some or all functions of the management apparatus 102 in combination with hardware of the processor 1510.

The memory 1520 may include a volatile memory (volatile memory), for example, a random access memory (random access memory, RAM). The memory 1520 may further include a non-volatile memory (non-volatile memory), for example, a read-only memory (read-only memory, ROM), a flash memory, an HDD, or an SSD.

The memory 1520 stores executable code, and the processor 1510 executes the executable code to perform the method performed by the foregoing management apparatus 102.

Specifically, when the embodiment shown in FIG. 1 is implemented, and the interaction module 1021, the mapping module 1022, the metadata determining module 1023, and the authentication module 1024 described in the embodiment shown in FIG. 1 are implemented by using software, software or program code required for performing functions of the interaction module 1021, the mapping module 1022, the metadata determining module 1023, and the authentication module 1024 in FIG. 1 is stored in the memory 1520, interaction between the interaction module 1021 and another device is implemented through the communication interface 1530. The processor is configured to execute the instruction in the memory 1520, to implement the method performed by the management apparatus 102.

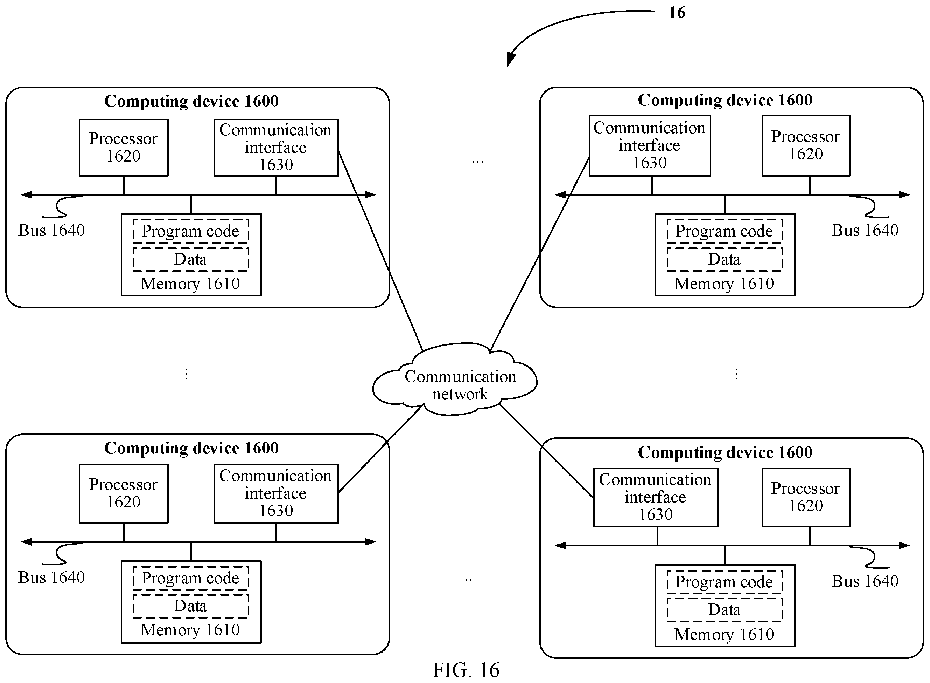

FIG. 16 is a diagram of a structure of a computing device cluster. The computing device cluster 160 shown in FIG. 16 includes a plurality of computing devices, and the foregoing management apparatus 102 may be deployed on the plurality of computing devices in the computing device cluster 160 in a distributed manner. As shown in FIG. 16, the computing device cluster 160 includes the plurality of computing devices 1600, and each computing device 1600 includes a memory 1620, a processor 1610, a communication interface 1630, and a bus 1640. The memory 1620, the processor 1610, and the communication interface 1630 implement communication connections to each other through the bus 1640.

The processor 1610 may use a CPU, a GPU, an ASIC, or one or more integrated circuits. The processor 1610 may be an integrated circuit chip and has a signal processing capability. In an implementation process, some functions of the management apparatus 102 may be implemented by using an integrated logic circuit of hardware in the processor 1610, or instructions in a form of software. The processor 1610 may alternatively be a DSP, an FPGA, a general-purpose processor, another programmable logic device, a discrete gate or transistor logic device, or a discrete hardware component, and may implement or perform some of methods, steps, and logical block diagrams disclosed in embodiments of this application. The general-purpose processor may be a microprocessor, or the processor may be any conventional processor or the like. The steps of the method disclosed with reference to embodiments of this application may be directly performed and completed by a hardware decoding processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 1620. In each computing device 1600, the processor 1610 reads information in the memory 1620, and may complete some functions of the management apparatus 102 in combination with hardware of the processor 1610.

The memory 1620 may include a ROM, a RAM, a static storage device, a dynamic storage device, a hard disk (for example, an SSD or an HDD), and the like. The memory 1620 may store program code, for example, some or all program code used to implement the interaction module 1021, some or all program code used to implement the mapping module 1022, some or all program code used to implement the metadata determining module 1023, and some or all program code used to implement the authentication module 1024. For each computing device 1600, when the program code stored in the memory 1620 is executed by the processor 1610, the processor 1610 performs, based on the communication interface 1630, some methods performed by the management apparatus 102. For example, some computing devices 1600 may be configured to perform the methods performed by the interaction module 1021. Some computing devices 1600 may be configured to perform the method performed by the mapping module 1022, some computing devices 1600 are configured to perform the method performed by the metadata determining module 1023, and some computing devices 1600 are configured to perform the method performed by the authentication module 1024. The memory 1620 may further store data, for example, intermediate data or result data generated by the processor 1610 in an execution process, for example, the first metadata, the second metadata, the first permission information, and the second permission information.

The communication interface 1603 in each computing device 1600 is configured to communicate with the outside, for example, interact with another computing device 1600.

The bus 1640 may be a peripheral component interconnect bus, an extended industry standard architecture bus, or the like. For ease of representation, the bus 1640 in each computing device 1600 in FIG. 16 is represented by using only one thick line, but this does not mean that there is only one bus or only one type of bus.

A communication path is established between the plurality of computing devices 1600 by using a communication network, to implement a function of the management apparatus 102. Any computing device may be a computing device (for example, a server) in a cloud environment, a computing device in an edge environment, or a terminal device.

In addition, an embodiment of this application further provides a computer-readable storage medium. The computer-readable storage medium stores instructions. When the instructions are run on one or more computing devices, the one or more computing devices are enabled to perform the method performed by each module of the management apparatus 102 in the foregoing embodiments.

In addition, an embodiment of this application further provides a computer program product. When the computer program product is executed by one or more computing devices, the one or more computing devices perform any method in the data processing methods. The computer program product may be a software installation package. When any one of the foregoing data processing methods needs to be used, the computer program product may be downloaded, and the computer program product may be executed on a computer.

In addition, it should be noted that the described apparatus embodiment is merely an example. The units described as separate parts may or may not be physically separate, and parts displayed as units may or may not be physical units, may be located in one position, or may be distributed on a plurality of network units. Some or all of the modules may be selected based on actual requirements to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Usually, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented by using software, hardware, firmware, or any combination thereof. When software is used to implement embodiments, all or some embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

## Claims

1. A data processing method, wherein the method is applied to a data processing system, the data processing system comprises a computing engine, a management apparatus, and a storage apparatus, a first metadata model and a first permission model are built in the management apparatus, the first metadata model and the first permission model are adapted to the storage apparatus, and the method comprises:
receiving, by the management apparatus, an access request that is for metadata of target data and that is sent by the computing engine, wherein the target data is stored in the storage apparatus;
determining, by the management apparatus, the metadata of the target data based on a first mapping relationship in response to the access request, wherein the first mapping relationship is a mapping relationship between the first metadata model and a second metadata model, the second metadata model is adapted to the computing engine, and the metadata of the target data meets the second metadata model;
authenticating, by the management apparatus, the access request based on a second mapping relationship, wherein the second mapping relationship is a mapping relationship between the first permission model and a second permission model, and the second permission model is adapted to the computing engine; and
sending, by the management apparatus, the metadata of the target data to the computing engine after the access request passes the authentication.

2. The method according to claim 1, wherein the method further comprises:
receiving, by the management apparatus, a metadata update request sent by the computing engine;
translating, by the management apparatus in response to the metadata update request based on the first mapping relationship, original metadata carried in the metadata update request into target metadata, wherein the original metadata meets the second metadata model, and the target metadata meets the first metadata model;
authenticating, by the management apparatus, the metadata update request based on the second mapping relationship; and
updating, by the management apparatus, the target metadata to the management apparatus after the metadata update request passes the authentication.

3. The method according to claim 1 or 2, wherein the method further comprises:
outputting, by the management apparatus, a configuration page; and
establishing, by the management apparatus, the first mapping relationship in response to a first operation performed by a user on the configuration page, and establishing the second mapping relationship in response to a second operation performed by the user on the configuration page.

4. The method according to claim 3, wherein the method further comprises:
generating, by the management apparatus, an access control policy for the second metadata model and the second permission model in response to a third operation performed by the user on the configuration page.

5. The method according to any one of claims 1 to 4, wherein the data processing system comprises a plurality of computing engines, and the management apparatus comprises a metadata model and a permission model that are adapted to each of the plurality of computing engines.

6. The method according to any one of claims 1 to 5, wherein the metadata of the target data is second metadata, and the determining, by the management apparatus, the metadata of the target data based on a first mapping relationship in response to the access request comprises:
reading, by the management apparatus, first metadata based on the access request, wherein the first metadata meets the first metadata model; and
translating, by the management apparatus based on the first mapping relationship, the first metadata into the second metadata that meets the second metadata model;
the authenticating, by the management apparatus, the access request based on a second mapping relationship comprises:
translating, by the management apparatus based on the second mapping relationship, first permission information in the access request into second permission information that meets the first permission model, wherein the first permission information meets the second permission model; and
authenticating, by the management apparatus, the second permission information; and
the sending, by the management apparatus, the metadata of the target data to the computing engine after the access request passes the authentication comprises:
sending, by the management apparatus, the second metadata to the computing engine after the second permission information passes the authentication.

7. A data processing system, wherein the data processing system comprises a computing engine, a management apparatus, and a storage apparatus, a first metadata model and a first permission model are built in the management apparatus, and the first metadata model and the first permission model are adapted to the storage apparatus, wherein
the computing engine is configured to generate an access request for metadata of target data; and send the access request to the management apparatus;
the management apparatus is configured to determine the metadata of the target data based on a first mapping relationship in response to the access request; authenticate the access request based on a second mapping relationship; and send the metadata of the target data to the computing engine after the access request passes the authentication, wherein the first mapping relationship is a mapping relationship between the first metadata model and a second metadata model, the second metadata model is adapted to the computing engine, the metadata of the target data meets the second metadata model, the second mapping relationship is a mapping relationship between the first permission model and a second permission model, and the second permission model is adapted to the computing engine; and
the computing engine is further configured to read, based on the metadata of the target data, the target data stored in the storage apparatus.

8. The data processing system according to claim 7, wherein
the computing engine is further configured to generate a metadata update request; and send the metadata update request to the management apparatus; and
the management apparatus is further configured to translate, in response to the metadata update request based on the first mapping relationship, original metadata carried in the metadata update request into target metadata, wherein the target metadata meets the first metadata model, and the original metadata meets the second metadata model; authenticate the metadata update request based on the second mapping relationship; and update the target metadata to the management apparatus after the metadata update request passes the authentication.

9. The data processing system according to claim 7 or 8, wherein
the management apparatus is further configured to output a configuration page; establish the first mapping relationship in response to a first operation performed by a user on the configuration page; and establish the second mapping relationship in response to a second operation performed by the user on the configuration page.

10. The data processing system according to claim 9, wherein the management apparatus is further configured to generate an access control policy for the second metadata model and the second permission model in response to a third operation performed by the user on the configuration page.

11. The data processing system according to any one of claims 7 to 10, wherein the data processing system comprises a plurality of computing engines, and the management apparatus comprises a metadata model and a permission model that are adapted to each of the plurality of computing engines.

12. The data processing system according to any one of claims 7 to 11, wherein the metadata of the target data is second metadata; and
the management apparatus is specifically configured to read first metadata based on the access request, wherein the first metadata meets the first metadata model; translate, based on the first mapping relationship, the first metadata into the second metadata that meets the second metadata model; translate, based on the second mapping relationship, first permission information in the access request into second permission information that meets the first permission model, wherein the first permission information meets the second permission model; authenticate the second permission information; and send the second metadata to the computing engine after the second permission information passes the authentication.

13. A management apparatus, wherein the management apparatus is used in a data processing system, the data processing system further comprises a computing engine and a storage apparatus, a first metadata model and a first permission model are built in the management apparatus, the first metadata model and the first permission model are adapted to the storage apparatus, and the management apparatus comprises:
an interaction module, configured to receive an access request that is for metadata of target data and that is sent by the computing engine, wherein the target data is stored in the storage apparatus;
a metadata determining module, configured to determine the metadata of the target data based on a first mapping relationship in response to the access request, wherein the first mapping relationship is a mapping relationship between the first metadata model and a second metadata model, the second metadata model is adapted to the computing engine, and the metadata of the target data meets the second metadata model; and
an authentication module, configured to authenticate the access request based on a second mapping relationship, wherein the second mapping relationship is a mapping relationship between the first permission model and a second permission model, and the second permission model is adapted to the computing engine, wherein
the interaction module is further configured to send the metadata of the target data to the computing engine after the access request passes the authentication.

14. The management apparatus according to claim 13, wherein
the interaction module is further used by the management apparatus to receive a metadata update request sent by the computing engine;
the metadata determining module is further configured to translate, in response to the metadata update request based on the first mapping relationship, original metadata carried in the metadata update request into target metadata, wherein the original metadata meets the second metadata model, and the target metadata meets the first metadata model;
the authentication module is further configured to authenticate the metadata update request based on the second mapping relationship; and
the interaction module is further configured to update the target metadata to the management apparatus after the metadata update request passes the authentication.

15. The management apparatus according to claim 13 or 14, wherein
the interaction module is further configured to output a configuration page; and
the management apparatus further comprises:
a mapping module, configured to establish the first mapping relationship in response to a first operation performed by a user on the configuration page; and establish the second mapping relationship in response to a second operation performed by the user on the configuration page.

16. The management apparatus according to any one of claims 13 to 15, wherein the mapping module is further configured to generate an access control policy for the second metadata model and the second permission model in response to a third operation performed by the user on the configuration page.

17. The management apparatus according to any one of claims 13 to 16, wherein the data processing system comprises a plurality of computing engines, and the management apparatus comprises a metadata model and a permission model that are adapted to each of the plurality of computing engines.

18. The management apparatus according to any one of claims 13 to 17, wherein the metadata of the target data is second metadata;
the metadata determining module is specifically configured to read first metadata based on the access request, wherein the first metadata meets the first metadata model; and translate, based on the first mapping relationship, the first metadata into the second metadata that meets the second metadata model;
the authentication module is specifically configured to translate, based on the second mapping relationship, first permission information in the access request into second permission information that meets the first permission model, wherein the first permission information meets the second permission model; and authenticate the second permission information; and
the interaction module is specifically configured to send the second metadata to the computing engine after the second permission information passes the authentication.

19. A computing device cluster, comprising at least one computing device, wherein each computing device comprises a processor and a memory; and
the processor is configured to execute instructions stored in the memory, to enable the computing device cluster to perform the method according to any one of claims 1 to 6.

20. A computer-readable storage medium, wherein the computer-readable storage medium stores instructions, and when the instructions are run on at least one computing device, the at least one computing device is enabled to perform the method according to any one of claims 1 to 6.
